# EUROPÄISCHE PATENTSCHRIFT

(11) **EP 1 896 246 B1**
(45) Veröffentlichungstag und Bekanntmachung des Hinweises auf die Patenterteilung: **17.03.2010**
(21) Anmeldenummer: 06724821.1
(22) Anmeldetag: 16.05.2006
(51) Int. Cl.: B29C 67/00

(54) **VORRICHTUNG ZUM HERSTELLEN EINES DREIDIMENSIONALEN OBJEKTES**
DEVICE FOR PRODUCING A THREE-DIMENSIONAL OBJECT
DISPOSITIF DE PRODUCTION D'UN OBJET TRIDIMENSIONNEL

(30) Priorität: 01.07.2005 DE 102005030854
(43) Veröffentlichungstag der Anmeldung: 12.03.2008
(73) Patentinhaber: EOS GmbH Electro Optical Systems, 82152 Krailling (DE)
(72) Erfinder: HEINLEIN, Oliver, 82110 Germering (DE)
(74) Vertreter: Hofer, Dorothea
(86) Internationale Anmeldenummer: PCT/EP2006/004614
(87) Internationale Veröffentlichungsnummer: WO 2007/003244

(56) Entgegenhaltungen:
- US-A1- 2004 026 418
- US-B1- 6 554 600

## Beschreibung

Die Erfindung betrifft eine Vorrichtung zum Herstellen eines dreidimensionalen Objektes, insbesondere eine Vorrichtung, die einen Baubehälter aufweist, der unmittelbar nach Fertigstellung des Objektes der Vorrichtung entnommen werden kann.

Fig. 9 zeigt eine in dem europäischen Patent EP 1 037 739 B1 beschriebene Laser-Sintermaschine 1 mit einem Maschinengehäuse 2, in dem ein Bauraum 3 untergebracht ist. Im oberen Bereich 4 des Bauraums 3 ist ein Scanner 5 eines Sinterlasers 6 angeordnet, um einen Laserstrahl 7 abzulenken und auf eine Werkstückplattform 8 bzw. darauf geschichtetes Sintermaterial 9 zu fokussieren, welches schichtweise auf die Werkstückplattform 8 durch einen Beschichter 10 aufgetragen wird. Das Sintermaterial 9 wird dem Beschichter 10 aus einem nicht dargestellten Vorratsbehälter zugeführt.

Im unteren Bereich 11 des Bauraums 3 ist ein Wechselbehälter 12 eingesetzt, der sich aus Seitenwandungen 14 und der Werkstückplattform 8 zusammensetzt, die innerhalb der Seitenwandungen 14, d.h. innerhalb des durch diese gebildeten Schachtes nach oben und unten verfahrbar ist.

Um die Höhenverfahrbarkeit der Werkstückplattform 8 zu gewährleisten, ist eine Trägervorrichtung 20 vorgesehen, auf der sich die Werkstückplattform 8 beim Betrieb der Laser-Sintermaschine abstützt und auf welcher die Werkstückplattform 8 befestigt ist.

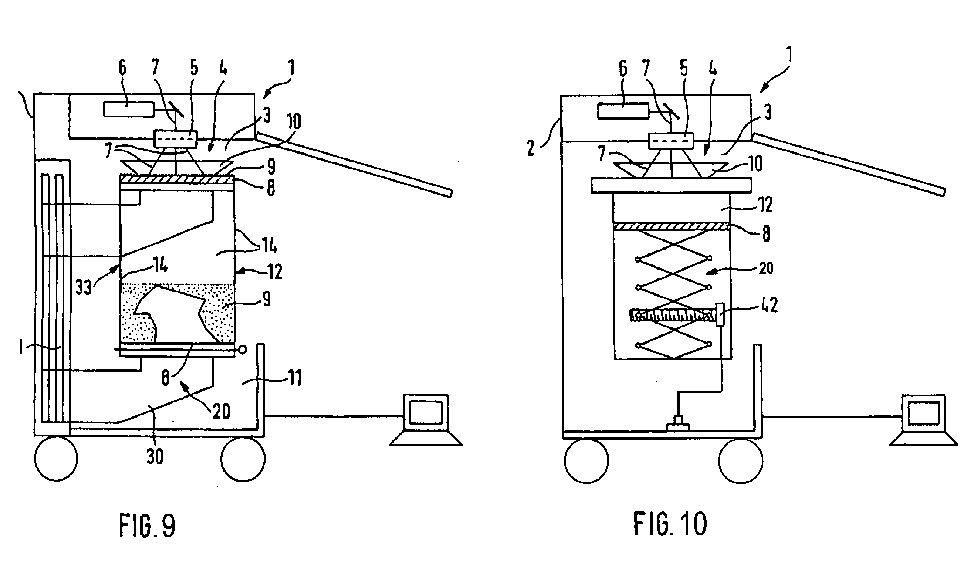

In Fig. 9 befindet sich die Werkstückplattform 8 in der obersten Stellung innerhalb des Wechselbehälters 12. Während des Bauvorgangs wird die Werkstückplattform 8 vor einem Schichtauftrag um ein Stück abgesenkt, so daß sie mit fortschreitendem Bauvorgang sich immer mehr dem unteren Ende der Seitenwandungen 14 nähert. Nach Abschluß des Bauvorgangs wird die Werkstückplattform 8 in ihrer untersten Stellung mit den Seitenwandungen 14 verrastet. In diesem Zustand kann der Wechselbehälter zusammen mit der seinen Behälterboden bildenden Werkstückplattform 8 und dem fertiggestellten Bauteil aus dem Bauraum 3 entnommen werden.

Die Trägervorrichtung 20 besteht aus Tragarmen 30, die in einer Führungsvorrichtung 31 im Bereich der Maschinengehäuserückseite angeordnet sind. Befindet sich die Werkstückplattform 8 in einer oberen oder mittleren Lage des Wechselbehälters 12, so greifen die Tragarme 30 durch senkrecht verlaufende Eingriffsausnehmungen 33 hindurch, die in der hinteren Seitenwandung angeordnet sind.

Alternativ ist es auch möglich, gemäß Fig. 10 die Trägervorrichtung 20 in den unteren Bereich des Wechselbehälters 12 fest einzubauen und beispielsweise als Scherenheber auszubilden, der über einen Spindeltrieb 42 stufenlos anhebbar und absenkbar ist. Auch eine teleskopierte Linearführung zum Anheben und Absenken der Trägervorrichtung ist möglich.

Der Vorteil eines Wechselbehälters besteht unter anderem darin, daß nach Fertigstellung eines Bauteils dieses nicht in der Maschine verbleiben muß, sondern mitsamt dem Wechselbehälter für den Abkühlvorgang entnommen werden kann, so daß die Sintermaschine sehr schnell nach Beendigung des Bauvorgangs wieder für einen neuen Einsatz zur Verfügung steht. Allerdings ist dies nur dann der Fall, wenn mehrere Wechselbehälter zur Verfügung stehen, so daß der entnommene Wechselbehälter durch einen anderen Wechselbehälter in der Maschine ersetzt werden kann.

Ein Wechselbehälter kann dadurch aufwendig gestaltet sein, daß in seinen Wandungen eine Heizvorrichtung integriert ist. Eine solche Heizvorrichtung hat den Vorteil gegenüber einer Beheizung des gesamten Bauraums, daß sie schneller reagieren kann und mit einem geringeren Energieaufwand verbunden ist. Ferner kann sie besser an die thermischen Bedürfnisse des jeweiligen Bauvorgangs angepaßt werden, als dies bei einer Beheizung des gesamten unteren Bereichs der Vorrichtung der Fall wäre.

Je aufwendiger jedoch ein Wechselbehälter gestaltet ist, um so höhere zusätzliche Kosten entstehen durch den Einsatz mehrerer solcher Wechselbehälter.

US-A-6 554 600 zeigt die Merkmale des Oberbegriffs des Anspruchs 1.

Die Aufgabe der vorliegenden Erfindung ist es daher, einen einfach gestalteten Wechselbehälter vorzusehen, bei dem dennoch die Vorteile einer bauteilnahen Beheizung des Pulverbettes vorhanden sind.

Die Aufgabe wird gelöst durch eine Vorrichtung nach Anspruch 1.

Weiterbildungen der Erfindungen sind in den Unteransprüchen gekennzeichnet.

Weitere Merkmale und Zweckmäßigkeiten der Erfindung werden anhand von Ausführungsbeispielen unter Bezugnahme auf die Zeichnungen beschrieben. Von den Figuren zeigen:
- Fig. 1: eine schematische Seitenschnittdarstellung einer er- findungsgemäßen Laser-Sintermaschine mit Wechselbe- hälter,
- Fig. 2: eine schematische Seitenschnittdarstellung einer er- findungsgemäßen Laser-Sintermaschine mit einer modi- fizierten Trägervorrichtung,
- Fig. 3: eine perspektivische Ansicht eines Wechselbehälters gemäß einer Ausführungsform der Erfindung,
- Fig. 4: eine weitere perspektivische Ansicht eines erfin- dungsgemäßen Wechselbehälters,
- Fig. 5: eine Schnittdarstellung, die die Beheizung eines er- findungsgemäßen Wechselbehälters mittels einer Wi- derstandsheizung zeigt,
- Fig. 6: eine Schnittdarstellung, die die Beheizung eines er- findungsgemäßen Wechselbehälters mittels einer Strahlungsheizung zeigt,
- Fig. 7: eine vertikale Schnittdarstellung, die die Beheizung eines erfindungsgemäßen Wechselbehälters mittels ei- nes Fluids zeigt,
- Fig. 8: eine horizontale Schnittdarstellung, die die Behei- zung eines erfindungsgemäßen Wechselbehälters mit- tels Heizgases zeigt,
- Fig. 9: eine schematische Seitenschnittdarstellung einer La- ser-Sintermaschine mit Wechselbehälter gemäß dem Stand der Technik und
- Fig. 10: eine Schnittdarstellung wie in Fig. 9, jedoch mit einer modifizierten Trägervorrichtung.

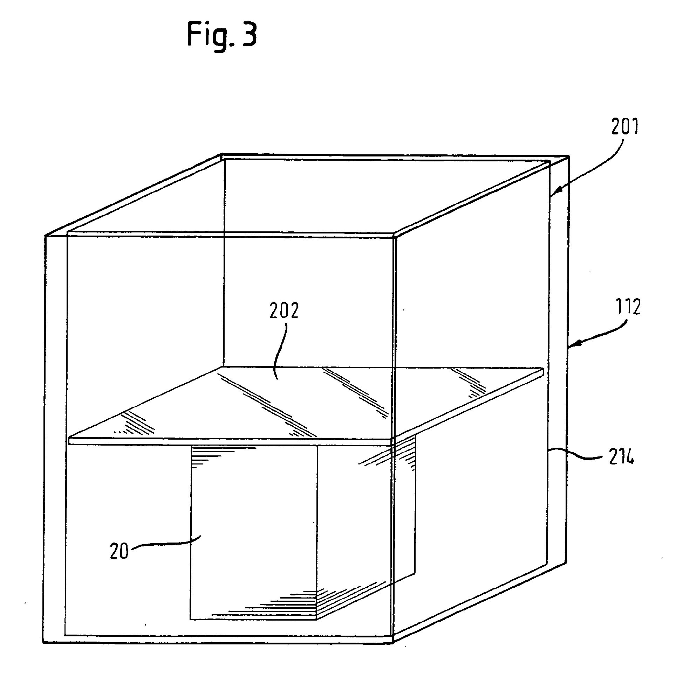

Fig. 3 zeigt eine perspektivische Ansicht eines in einer Laser-Sintermaschine zu verwendenden Baubehälters 112, dessen Seitenwandungen zum Zwecke der Erläuterung transparent dargestellt sind. In diesen Behälter 112 ist ein Innenbehälter 201 als Wechselbehälter eingefügt. Beide Behälter weisen vier zueinander im wesentlichen rechtwinklig angeordnete Seitenwandungen auf. Der Boden des Innenbehälters 201 bildet eine Werkstückplattform 202, auf welcher im Laufe des Bauvorgangs das Bauteil entsteht. Die Werkstückplattform 202 stützt sich auf einer außerhalb des Innenbehälters 201 angeordneten Trägervorrichtung 20 ab und ist durch geeignete Dichtungselemente gegenüber den Seitenwandungen 214 des Innenbehälters 201 zur Vermeidung von Pulververlusten abgedichtet.

Obwohl die beiden Behälter 201 und 112 in Fig. 3 einen rechtwinkligen horizontalen Querschnitt aufweisen, ist ein rechtwinkliger Querschnitt nicht zwingend notwendig. Es sind beliebige Querschnittsflächen, insbesondere auch kreisförmige Querschnitte möglich.

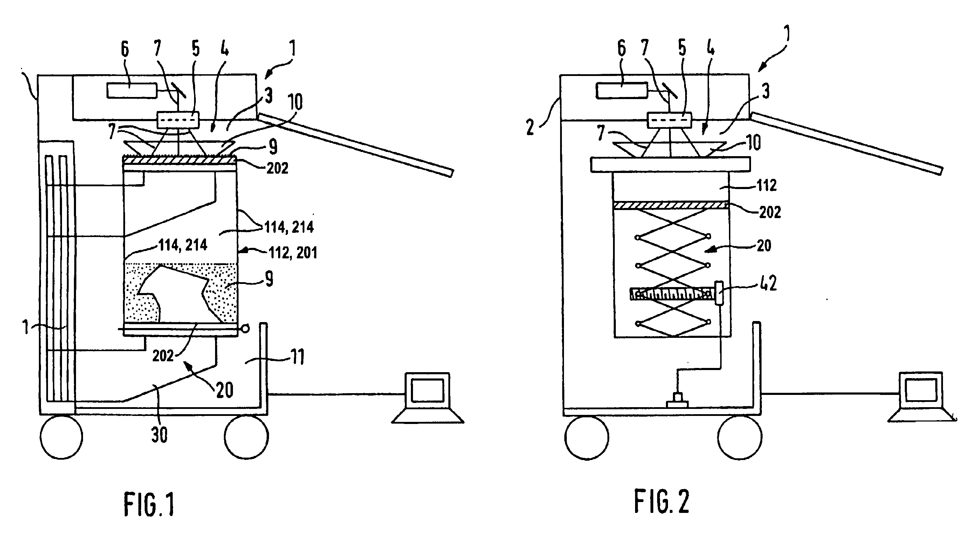

Fig. 1 und 2 zeigen jeweils die Anordnung der Behälter 112 und 201 in einer erfindungsgemäßen Vorrichtung zum Herstellen von dreidimensionalen Objekten, die ohne dass die Erfindung hierauf beschränkt ist, als Lasersintermaschine dargestellt ist. Merkmale, die dieselben Bezugszeichen tragen, wie sie in Fig. 9 bzw. 10 verwendet wurden, sind mit jenen in Fig. 9 bzw. 10 identisch. Zum Zwecke der besseren Veranschaulichung ist der Baubehälter 112 vollkommen transparent dargestellt.

Die Trägervorrichtung 20 kann entweder vollständig unterhalb der Werkstückplattform 202 angeordnet sein (Fig. 2) oder aber teilweise seitlich des Behälters 112 angebracht sein (Fig. 1).

Ein Bauvorgang läuft so ab, daß zu Beginn die Werkstückplattform 202 bis an das obere Ende des Innenbehälters 201 gefahren wird und nachfolgend sukzessive, d.h. Schichthöhe für Schichthöhe, die Werkstückplattform 202 relativ zu den Seitenwandungen 214 des Innenbehälters 201 abgesenkt wird, wobei der über der Werkstückplattform liegende Bereich immer wieder neu mit pulverartigem Sintermaterial ausgefüllt wird. Sobald die letzte Schicht des Bauteils gesintert ist, kann über die Trägervorrichtung 20 die Werkstückplattform 202 in einen unteren Bereich des Innenbehälters 201 abgesenkt werden, wo die Werkstückplattform 202 an den Seitenwänden 214 des Innenbehälters 201 arretiert wird. Dies kann beispielsweise über Steckschieber geschehen, die in miteinander fluchtende Bohrungen in der Wandung 214 des Innenbehälters und in der Werkstückplattform 202 eingeschoben werden. Der das fertiggestellte Bauteil enthaltende Innenbehälter 201 kann daraufhin für den Abkühlvorgang dem Behälter 112 entnommen werden und ein neuer Innenbehälter kann für einen neuen Bauvorgang in den Behälter 112 eingesetzt werden.

Der wechselbare Innenbehälter 201 weist einen einfachen Aufbau auf. Es genügt ein geschweißter Aluminiumrahmen, dessen Wandstärke nur so groß gewählt werden muß, dass ein einfaches Fügen in den Baubehälter 112 gewährleistet ist und eine hinreichende Stabilität für das Abkühlen des Bauteiles außerhalb der Vorrichtung vorhanden ist. Natürlich sind auch andere geeignete Materialien als Aluminium denkbar.

Der Baubehälter 112 kann aufwendig gestaltet sein. Durch das Vorhandensein von Heizelementen in den Wandungen 114 des Behälters 112 kann das Pulverbett in dem Innenbehälter 201 auf effektive Weise beheizt werden kann. Insbesondere bei parallel verlaufenden Wandungen des Innenbehälters 201 und des Behälters 112, die nur einen geringen Abstand zueinander aufweisen, ist für eine gute Wärmeübertragung gesorgt. Damit ist es einerseits nicht erforderlich, den gesamten Bauraum 3 in der Lasersintermaschine aufzuheizen und andererseits ist es nicht erforderlich, die Heizelemente in den Wandungen des zu wechselnden Innenbehälters unterzubringen. Obwohl für eine effektive Beheizungsmöglichkeit gesorgt ist, kann also dennoch der zu wechselnde Behälter 201 einfach und kostengünstig gestaltet werden.

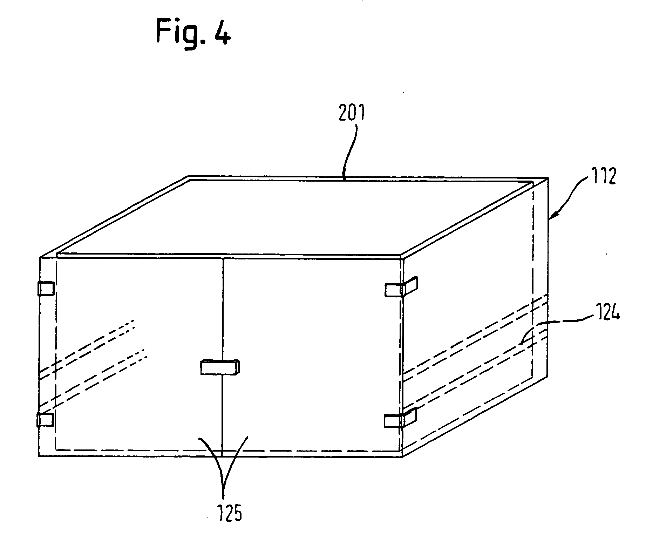

Fig. 4 zeigt eine Möglichkeit, die Entnehmbarkeit des Innenbehälters 201 aus dem Behälter 112 zu gewährleisten. Hierzu weist der Behälter 112 an seiner Vorderseite eine Öffnung auf, welche mit Türen 125 verschließbar ist. Alternativ dazu ist ein anderer Verschlussmechanismus, beispielsweise eine Klappe oder ein Rollo vorstellbar. Die Entnahme des Innenbehälters 201 erfolgt in dem in Fig. 4 gezeigten Fall dergestalt, dass letzterer durch die Öffnung an der Vorderseite aus dem Behälter 112 herausgezogen wird.

Neben der in Fig. 4 gezeigten Entnahmemöglichkeit sind auch weitere Entnahmemechanismen für den Innenbehälter 201 denkbar. Lediglich beispielhaft seien zwei weitere Möglichkeiten genannt: Zum einen kann der Innenbehälter zusammen mit der Werkstückplattform aus dem Behälter 112 nach unten herausgefahren werden, um daraufhin von einer Position unterhalb des Behälters 112 entfernt zu werden. Zum anderen ist es denkbar, dass die Wände 114 des Behälters 112 nach oben in einen Bereich oberhalb des Innenbehälters 201 gefahren werden. Der Innenbehälter 201 kann dann zur Vorderseite der Vorrichtung hin entnommen werden. In diesem Fall ist es nicht notwendig, in dem Behälter 112 eine Entnahmeöffnung für den Innenbehälter 201 vorzusehen.

Zur Verhinderung einer Abwärtsbewegung des Innenbehälters 201 bezüglich des Behälters 112 ist eine Vielzahl von Ausgestaltungen denkbar. In Fig. 4 sind beispielsweise an den Innenseiten zweier gegenüberliegender Seitenwandungen 114 des Behälters 112 Vorsprünge 124 angebracht, die zur Fixierung der Seitenwandungen 214 des Innenbehälters 201 an dem Behälter 112 dienen. Diese Vorsprünge können beispielsweise in der Form von horizontalen Flächen, die senkrecht zu den Wandungen 114 in das Innere des Behälters 112 ragen, gestaltet sein. In diesem Fall kann der Innenbehälter 201 mit seiner Unterseite auf den horizontalen Flächen ruhen oder aber er kann an der Außenseite seiner Seitenwände 214 Außenvorsprünge aufweisen, welche auf den genannten horizontalen Flächen aufliegen und eine Abwärtsbewegung des Innenbehälters 201 relativ zu dem Baubehälter 112 verhindern.

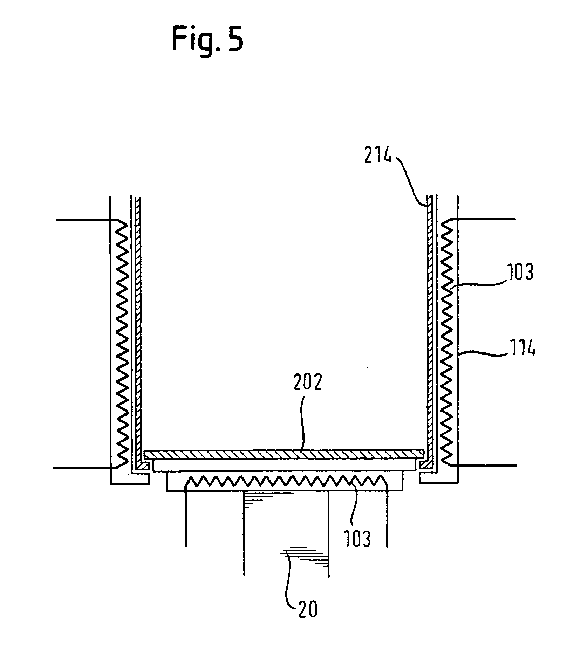

Fig. 5 zeigt als Beispiel für eine Beheizung des Innenbehälters 201 in den Seitenwänden 114 des Behälters 112 angebrachte Heizwiderstände 103. Weiterhin ist eine Widerstandsheizung 103a unterhalb der Werkstückplattform 202 dargestellt. Diese bodenseitige Widerstandsheizung 103a wird während des Bauvorgangs von der Trägervorrichtung 20 mit der Werkstückplattform 202 mitbewegt. Es ist möglich, dass die Widerstandsheizung in dem Boden des Behälters 112 untergebracht ist, welcher dann von der darunter angeordneten Trägervorrichtung 20 zusammen mit der Werkstückplattform 202 relativ zur Innenseite der Wände 214 des Innenbehälters 201 bewegt wird.

Um eine gute Wärmeübertragung zu gewährleisten, ist es vorteilhaft, wenn bei dieser Form der Beheizung die Wandungen 114 und 214 der beiden Behälter eng aneinander anliegen. Ferner sollte der Innenbehälter 201 aus einem Material gefertigt sein, das gut die Wärme leitet.

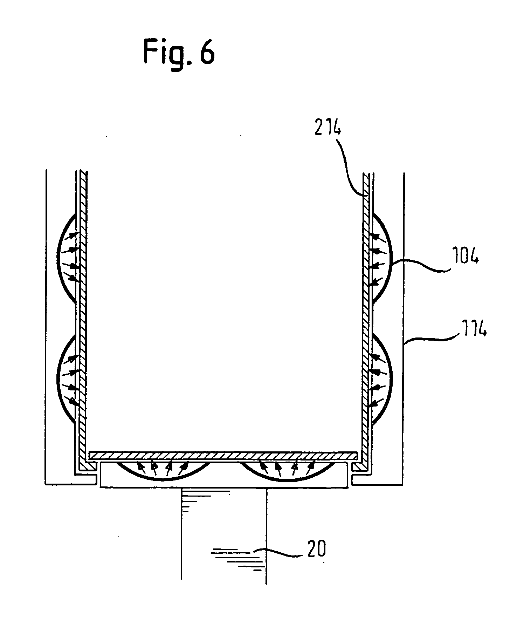

Fig. 6 zeigt eine Ausführungsform, bei der in den Seitenwandungen des Behälters 112 und unterhalb der Werkstückplattform 202 Heizstrahler 104 angebracht sind. Bei dieser Form der Beheizung ist es nicht störend, wenn ein Spalt zwischen den Wandungen der beiden Behälter vorhanden ist, da die Wärme mittels Strahlung an die Wandung des Innenbehälters weitergegeben wird und von dieser dem Pulverbett zugeführt wird.

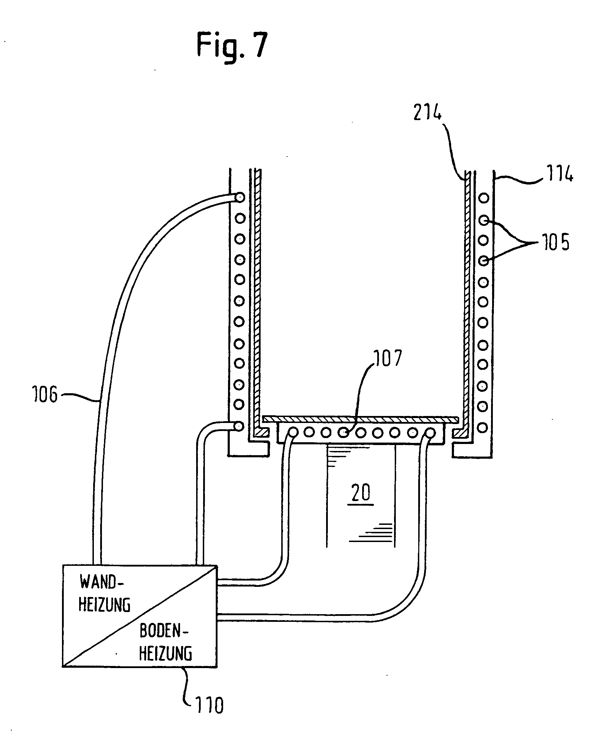

Das Vorsehen der Beheizung außerhalb des Innenbehälters 201 ermöglicht es, Beheizungsarten zu wählen, deren Verwendung in einem zu wechselnden Behälter zu Problemen führen würde. Fig. 7 zeigt beispielsweise eine Beheizung mittels eines Fluids, das in den Innenbehälter 201 umgebenden Heizschlangen 105 fließt. Die Heizschlangen sind mittels Leitungen 106 mit einem Heiz- und Pumpaggregat 110 verbunden, das das Fluid aufheizt und durch die Heizschlangen pumpt. Parallel dazu wird das aufgeheizte Fluid durch Leitungen 107 unterhalb der Werkstückplattform 202 gepumpt.

Wäre es erforderlich, die Heizschlangen zusammen mit dem Innenbehälter 201 zu wechseln, so würde das An- und Abkoppeln der Heizschlangen von der Heiz- und Pumpvorrichtung 110 den Tauschvorgang des Behälters 201 verkomplizieren.

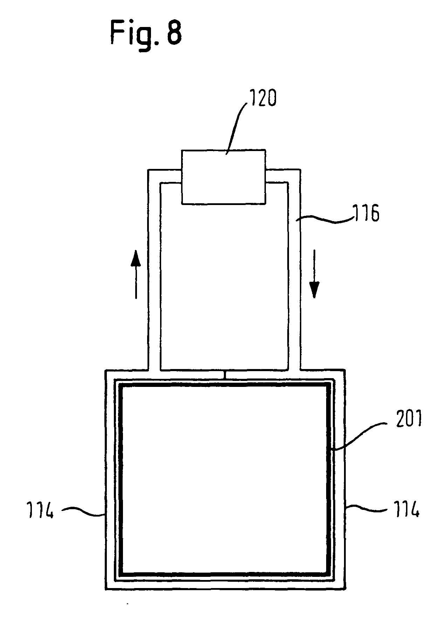

Es ist auch möglich, statt eines Fluids Heizgas für die Beheizung zu verwenden, wie dies in Fig. 8 dargestellt ist. Fig. 8 zeigt einen Horizontalquerschnitt eines mittels Heizgas beheizten Innenbehälters 201. Das Heizgas zirkuliert dabei durch Hohlräume 108 in den Wandungen 114 des Behälters 112. Die Hohlräume 108 in den Wandungen 114 sind über Zuleitungen 116 mit einer Heizeinrichtung 120 verbunden. Obwohl dies in Fig. 8 nicht dargestellt ist, kann die Werkstückplattform 202 in der gleichen Weise beheizt werden.

Würde das Heizgas durch Hohlräume in den Wänden des zu wechselnden Behälters strömen, wäre eine Abdichtung zur Vermeidung eines Gasaustritts bei einem Behälterwechsel erforderlich, was zu einem erhöhten Aufwand für den Wechselbehälter führen würde.

Wie bereits erwähnt, ist die Erfindung nicht auf eine Laser-Sintermaschine beschränkt, sondern auf alle Rapid-Prototyping-Verfahren anwendbar, bei denen ein Objekt aus einem verfestigbaren Material schichtweise auf einer Bau- bzw. Werkstückplattform aufgebaut wird.

## Patentansprüche

1. Vorrichtung zum Herstellen eines dreidimensionalen Objektes durch aufeinanderfolgendes schichtweises Verfestigen eines verfestigbaren Materials (9) an dem Querschnitt des Objektes entsprechenden Stellen mit
einem in einem Maschinengehäuse vorgesehenen Bauraum (3), in dem ein Behälter (112) vorgesehen ist und einer Trägervorrichtung (20), **dadurch gekennzeichnet, dass**
innerhalb des Behälters (112) ein Innenbehälter (201) angeordnet ist, welcher einen Begrenzungsrahmen für das Material (9) darstellt, dessen Behälterboden eine Werkstückplattform (202) bildet, welche beim Betrieb der Vorrichtung durch die Trägervorrichtung (20) abgestützt wird und relativ zu den Wänden (214) des Innenbehälters (201) bewegbar ist, und der Innenbehälter (201) aus dem Behälter (112) entnehmbar ist.

2. Vorrichtung nach Anspruch 1, bei der der Behälter (112) ein vorgefertigter Wechselbehälter ist, der aus dem Bauraum (3) entnehmbar ist.

3. Vorrichtung nach Anspruch 1 oder 2, bei der zwischen Werkstückplattform (202) und Trägervorrichtung (20) der Boden des Behälters (112) angeordnet ist, welcher relativ zu den Wänden (214) des Innenbehälters (201) bewegbar ist.

4. Vorrichtung nach einem der Ansprüche 1 bis 3, bei der in den Behälter (112) eine Heizvorrichtung (103; 104; 105, 108) integriert ist.

5. Vorrichtung nach Anspruch 4, bei der die Heizvorrichtung aus Widerstandsheizelementen (103) besteht, die in die Wände des Behälters (112) integriert sind.

6. Vorrichtung nach Anspruch 4, bei der die Heizvorrichtung aus Strahlungsheizelementen (104) besteht, die in die Wände des Behälters (112) integriert sind.

7. Vorrichtung nach Anspruch 4, bei der die Beheizung durch ein Fluid erfolgt, welches innerhalb der Wände und/oder des Bodens des Behälters 112 umläuft.

8. Vorrichtung nach Anspruch 4, bei der die Beheizung durch ein Gas erfolgt, welches innerhalb der Wände und/oder des Bodens des Behälters 112 umläuft.

9. Vorrichtung nach einem der vorangehenden Ansprüche, bei der die Werkstückplattform (202) an den Wänden (214) des Innenbehälters (201) arretierbar ist.

10. Vorrichtung nach einem der vorangehenden Ansprüche, bei der die Trägervorrichtung (20) aus einer Hubvorrichtung besteht, die im unteren Teil des Behälters (112) angeordnet ist.

11. Vorrichtung nach einem der vorangehenden Ansprüche, bei der der Innenbehälter (201) entlang zweier an den Seitenwänden des Behälters (112) angebrachter Führungen (124) in den Behälter (112) einschiebbar ist.

## Claims

1. Device for manufacturing a three-dimensional object by subsequently solidifying a solidifiable material (9) layerwise at the positions corresponding to the cross section of the object, having
a building space (3) provided in a machine frame, in which a container (112) is provided, and
a support device (20), **characterized in that**
an inner container (201) is arranged inside of the container (112), which inner container is a confining frame for the material (9) having a container bottom that forms a work piece platform (202), which work piece platform, during the operation of the device, is supported by the support device (20) and can be moved relative to the walls (214) of the inner container (201), wherein the inner container (201) is removable from the container (112).

2. Device according to claim 1, in which the container (112) is a pre-manufactured swap container that can be removed from the building space (3).

3. Device according to claim 1 or 2, in which the bottom of the container (112) is arranged between the work piece platform (202) and the support device (20), which bottom of the container can be moved relative to the walls (214) of the inner container (201).

4. Device according to any one of claims 1 to 3, in which a heating device (103; 104; 105, 108) is integrated in the container (112).

5. Device according to claim 4, in which the heating device consists of resistance heating elements (103) that are integrated in the walls of the container (112).

6. Device according to claim 4, in which the heating device consists of radiant heating elements (104) that are integrated in the walls of the container (112).

7. Device according to claim 4, wherein the heating is effected by a fluid that circulates inside the walls and/or the bottom of the container 112.

8. Device according to claim 4, wherein the heating is effected by a gas that circulates inside the walls and/or the bottom of the container 112.

9. Device according to any one of the preceding claims, in which the work piece platform (202) is lockable at the walls (214) of the inner container (201).

10. Device according to any one of the preceding claims, in which the support device (20) consists of a lifting device that is arranged in the lower part of the container (112).

11. Device according to any one of the preceding claims, in which the inner container (201) can be shifted into the container (112) along two guidings (124) that are attached at the sidewalls of the container (112).

## Revendications

1. Système pour la fabrication d'un objet tridimensionnel par solidification successive de couches d'un matériau solidifiable (9) à des emplacements correspondant à la section de l'objet, avec
un compartiment de construction (3) prévu dans un carter de machine, où est prévu un conteneur (112), et
un dispositif de support (20),
**caractérisé**
**en ce qu'**à l'intérieur du conteneur (112) est disposé un conteneur intérieur (201) qui constitue un cadre de délimitation pour le matériau (9) et dont le fond de conteneur forme une plate-forme de pièce (202), laquelle est soutenue par le dispositif de support (20) pendant le fonctionnement du système et est déplaçable par rapport aux parois (214) du conteneur intérieur (201), et en ce que le conteneur intérieur (201) est retirable du conteneur (112).

2. Système selon la revendication 1, où le conteneur (112) est un conteneur renouvelable préfabriqué retirable du compartiment de construction (3).

3. Système selon la revendication 1 ou 2, où le fond du conteneur (112) est situé entre la plate-forme de pièce (202) et le dispositif de support (20), ledit fond de conteneur étant déplaçable par rapport aux parois (214) du conteneur intérieur (201).

4. Système selon l'une des revendications 1 à 3, où un dispositif de chauffage (103 ; 104 ; 105, 108) est intégré au conteneur (112).

5. Système selon la revendication 4, où le dispositif de chauffage est composé d'éléments chauffants à résistance (103) intégrés aux parois du conteneur (112).

6. Système selon la revendication 4, où le dispositif de chauffage est composé d'éléments chauffants par rayonnement (104) intégrés aux parois du conteneur (112).

7. Système selon la revendication 4, où le chauffage est réalisé au moyen d'un fluide circulant à l'intérieur des parois et/ou du fond du conteneur (112).

8. Système selon la revendication 4, où le chauffage est réalisé au moyen d'un gaz circulant à l'intérieur des parois et/ou du fond du conteneur (112).

9. Système selon l'une des revendications précédentes, où la plate-forme de pièce (202) est fixable contre les parois (214) du conteneur intérieur (201).

10. Système selon l'une des revendications précédentes, où le dispositif de support (20) est composé d'un dispositif de levage disposé dans la partie inférieure du conteneur (112).

11. Système selon l'une des revendications précédentes, où le conteneur intérieur (201) est insérable dans le conteneur (112) par coulissement sur deux glissières (124) disposées contre les parois latérales du conteneur (112).
